(19) Europäisches Patentamt
European Patent Office
Office européen des brevets

(11) **EP 3 528 565 B1**

(12) **EUROPEAN PATENT SPECIFICATION**

(45) Date of publication and mention
of the grant of the patent:
**08.01.2025 Bulletin 2025/02**

(21) Application number: **16920616.6**

(22) Date of filing: **04.11.2016**

(51) International Patent Classification (IPC):
*H04L 5/00* (2006.01)          *H04L 5/14* (2006.01)
*H04W 72/04* (2023.01)          *H04L 27/26* (2006.01)

(52) Cooperative Patent Classification (CPC):
**H04L 27/2613; H04L 5/0051; H04L 5/0094;**
**H04L 5/1469; H04W 72/04**

(86) International application number:
**PCT/CN2016/104782**

(87) International publication number:
**WO 2018/082067 (11.05.2018 Gazette 2018/19)**

(54) **METHOD FOR TRANSMITTING SOUNDING REFERENCE SIGNAL, AND NETWORK DEVICE AND TERMINAL DEVICE**

VERFAHREN ZUR ÜBERTRAGUNG EINES KLANGREFERENZSIGNALS SOWIE NETZWERKVORRICHTUNG UND ENDGERÄTEVORRICHTUNG

PROCÉDÉ DE TRANSMISSION DE SIGNAL DE RÉFÉRENCE DE SONDAGE, DISPOSITIF DE RÉSEAU ET DISPOSITIF TERMINAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.08.2019 Bulletin 2019/34**

(73) Proprietor: **Huawei Technologies Co., Ltd.**
**Longgang**
**Shenzhen, Guangdong 518129 (CN)**

(72) Inventor: **HE, Chuanfeng**
**Shenzhen**
**Guangdong 518129 (CN)**

(74) Representative: **Thun, Clemens**
**Mitscherlich PartmbB**
**Patent- und Rechtsanwälte**
**Karlstraße 7**
**80333 München (DE)**

(56) References cited:
**EP-A1- 3 136 641          WO-A1-2013/162287**
**WO-A1-2015/163645          CN-A- 103 647 626**
**CN-A- 104 247 304          CN-A- 104 427 631**
**US-A1- 2011 268 028**

• **SAMSUNG: "Discussion on SRS capacity enhancement with increasing UpPTS symbols", vol. RAN WG1, no. Anaheim, USA; 20151115 - 20151122, 15 November 2015 (2015-11-15), XP051003158, Retrieved from the Internet <URL:http://www.3gpp. org/ftp/Meetings_3GPP_SYNC/RAN1/Docs/> [retrieved on 20151115]**

## Description

### TECHNICAL FIELD

Embodiments of this application relate to the communications field, and in particular, to a method for transmitting a sounding reference signal, a terminal device, and a network device in the communications field.

### BACKGROUND

In a Long Term Evolution (Long Term Evolution, "LTE" for short) system, a base station needs a terminal device to send a sounding reference signal (sounding reference signal, "SRS" for short), so that the base station can estimate uplink channel information based on the SRS, and further correctly schedule the terminal device.

In an SRS transmission process, symbol overheads are required, and how to reduce symbol overheads in SRS transmission needs to be studied.

Further, prior art document R1-156785, 3GPP TSG RAN WG1 Meeting#83, Anaheim, USA, 15th - 22th November 2015 refers to a discussion on SRS capacity enhancements with increasing UpPTS symbols.

### SUMMARY

Embodiments of this application provide a method for transmitting a sounding reference signal SRS, a network device, and a terminal device, to reduce symbol overheads during SRS transmission. This problem is solved by the subject matter of the independent claims. Further implementation forms are provided in the dependent claims.

### BRIEF DESCRIPTION OF DRAWINGS

FIG. 1 is a schematic diagram of a communications system according to an embodiment of this application;
FIG. 2 is a diagram of a frame structure type in an LTE TDD system for communication between a terminal device and an access network according to an embodiment of this application;
FIG. 3 is a schematic flowchart of a method for transmitting an SRS according to an embodiment of this application;
FIG. 4 is a schematic diagram of carrier switching according to an embodiment of this application;
FIG. 5 is a schematic block diagram of a network device according to an embodiment of this application;
FIG. 6 is a schematic block diagram of a terminal device according to an embodiment of this application; and
FIG. 7 is a schematic block diagram of a communications apparatus according to an embodiment of this application.

### DESCRIPTION OF EMBODIMENTS

The following describes technical solutions in embodiments of the present invention with reference to accompanying drawings.

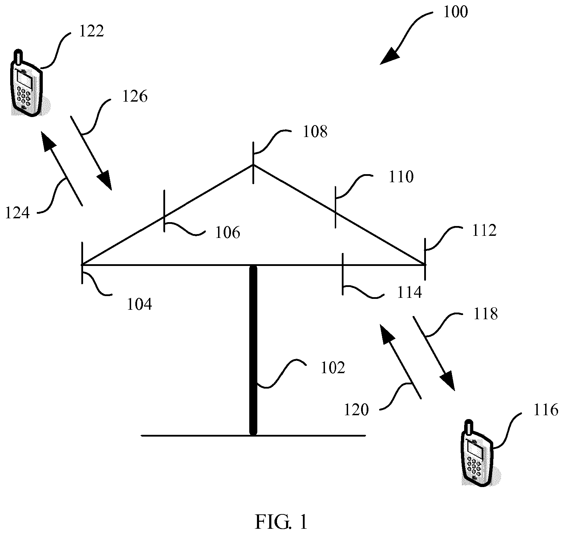

FIG. 1 is a schematic diagram of a communications system for transmitting information according to this application. As shown in FIG. 1, the communications system 100 includes a network device 102, and the network device 102 may include a plurality of antennas, for example, antennas 104, 106, 108, 110, 112, and 114. In addition, the network device 102 may additionally include a transmitter chain and a receiver chain. A person of ordinary skill in the art may understand that the transmitter chain and the receiver chain each may include a plurality of components (for example, a processor, a modulator, a multiplexer, a demodulator, a demultiplexer, or an antenna) related to signal sending and receiving.

The network device 102 may communicate with a plurality of terminal devices (for example, a terminal device 116 and a terminal device 122). However, it may be understood that the network device 102 may communicate with any quantity of terminal devices similar to the terminal device 116 or 122. The terminal devices 116 and 122 may be, for example, cellular phones, smartphones, portable computers, handheld communications devices, handheld computing devices, satellite radio apparatuses, global positioning systems, PDAs, and/or any other appropriate devices configured to perform communication in the wireless communications system 100.

As shown in FIG. 1, the terminal device 116 communicates with the antennas 112 and 114. The antennas 112 and 114 send information to the terminal device 116 over a forward link 118, and receive information from the terminal device 116 over a reverse link 120. In addition, the terminal device 122 communicates with the antennas 104 and 106. The antennas 104 and 106 send information to the terminal device 122 over a forward link 124, and receive information from the terminal device 122 over a reverse link 126.

For example, in a frequency division duplex (FDD, Frequency Division Duplex) system, the forward link 118 and the reverse link 120 may use different frequency bands, and the forward link 124 and the reverse link 126 may use different frequency bands.

For another example, in a time division duplex (TDD, Time Division Duplex) system and a full duplex (Full Duplex) system, the forward link 118 and the reverse link 120 may use a same frequency band, and the forward link 124 and the reverse link 126 may use a same frequency band.

Each antenna (or an antenna group that includes a plurality of antennas) and/or area that are/is designed for communication are/is referred to as a sector of the network device 102. For example, the antenna group may be designed to communicate with a terminal device in a sector within a coverage area of the network device 102. In a process in which the network device 102 separately communicates with the terminal devices 116 and 122 over the forward links 118 and 124, a transmit antenna of the network device 102 may improve signal-to-noise ratios of the forward links 118 and 124 through beamforming. In addition, in comparison with a manner in which a network device sends, by using a single antenna, signals to all terminal devices connected to the network device, when the network device 102 sends, through beamforming, signals to the terminal devices 116 and 122 that are randomly scattered in a related coverage area, a mobile device in a neighboring cell is subject to less interference.

At a given time, the network device 102, the terminal device 116, or the terminal device 122 may be a wireless communications sending apparatus and/or a wireless communications receiving apparatus. When sending data, the wireless communications sending apparatus may encode the data for transmission. Specifically, the wireless communications sending apparatus may obtain (for example, generate, receive (from another communications apparatus), or store (in a memory)) a specific quantity of data bits that need to be sent to the wireless communications receiving apparatus through a channel. The data bits may be included in a transport block (or a plurality of transport blocks) of data, and the transport block may be segmented to generate a plurality of code blocks.

In addition, the communications system 100 may be a public land mobile network (English full name: Public Land Mobile Network, PLMN for short) network, a D2D network, an M2M network, or another network. FIG. 1 is merely a simplified schematic diagram of an example. The network may further include another network device that is not shown in FIG. 1.

This application describes each embodiment in combination with a network device. The network device may be a device that communicates with a terminal device, for example, a base station or a base station controller. Each network device may provide communication coverage for a specific geographic area, and may communicate with a terminal device (for example, UE) in the coverage area (cell). The network device may be a base transceiver station (Base Transceiver Station, "BTS" for short) in a GSM system or a CDMA system, or may be a NodeB (NodeB, "NB" for short) in a WCDMA system, or may be an evolved NodeB (Evolved NodeB, "eNB" or "eNodeB" for short) in an LTE system, or a wireless controller in a cloud radio access network (Cloud Radio Access Network, "CRAN" for short), or the network device may be a network device in a future 5G network or a network device in a future evolved public land mobile network (Public Land Mobile Network, "PLMN" for short), or the like.

In addition, this application describes each embodiment in combination with a terminal device. The terminal device may be an access terminal, user equipment (User Equipment, "UE" for short), a subscriber unit, a subscriber station, a mobile station, a mobile console, a remote station, a remote terminal, a mobile terminal, a user terminal, a terminal, a wireless communications device, a user agent, or a user apparatus. The access terminal may be a cellular phone, a cordless phone, a Session Initiation Protocol (Session Initiation Protocol, "SIP" for short) phone, a wireless local loop (Wireless Local Loop, "WLL" for short) station, a personal digital assistant (Personal Digital Assistant, "PDA" for short), a handheld device having a wireless communication function, a computing device, another processing device connected to a wireless modem, an in-vehicle device, a wearable device, a terminal device in the Internet of Things, a virtual reality device, a terminal device in a future 5G network, a terminal device in a future evolved public land mobile network (Public Land Mobile Network, "PLMN" for short), or the like.

A method and an apparatus for transmitting a sounding reference signal provided in the embodiments of this application may be applied to the terminal device or the network device. The terminal device or the network device includes a hardware layer, an operating system layer running at the hardware layer, and an application layer running at the operating system layer. The hardware layer includes hardware such as a central processing unit (Central Processing Unit, CPU), a memory management unit (MMU, Memory Management Unit), and a memory (also referred to as a main memory). The operating system may be any one or more computer operating systems that implement service processing by using a process (Process), for example, a Linux operating system, a Unix operating system, an Android operating system, an iOS operating system, or a Windows operating system. The application layer includes applications such as a browser, an address book, word processing software, and instant messaging software. In addition, in the embodiments of this application, a specific structure of an entity for performing the method for transmitting a sounding reference signal is not specially limited in this application, provided that a program recording code of the method for transmitting a signal in the embodiments of this application can be run to perform communication according to the method for transmitting a signal in the embodiments of this application. For example, the entity for performing the method for transmitting feedback information in the embodiments of this application may be the terminal device or the network device, or a functional module that is in the terminal device or the network device and that can invoke a program and execute the program.

In addition, aspects or features of this application may be implemented as a method, an apparatus, or a product that uses standard programming and/or engineering technologies. The term "product" used in this application covers a computer program that can be accessed from any computer readable device, carrier, or medium. For example, the computer readable medium may include but is not limited to: a magnetic storage device (for example, a hard disk, a floppy disk, or a magnetic tape), an optical disc (for example, a compact disc (Compact Disc, CD), or a digital versatile disc (Digital Versatile Disc, DVD)), a smart card, and a flash memory device (for example, an erasable programmable read-only memory (Erasable Programmable Read-Only Memory, EPROM), a card, a stick, or a key drive). In addition, various storage media described in this specification may indicate one or more devices and/or other machine readable media that are configured to store information. The term "machine readable medium" may include but is not limited to a radio channel, and various other media that can store, include, and/or carry an instruction and/or data.

It should be understood that the technical solutions in the embodiments of this application may be applied to an LTE TDD system. As an example instead of a limitation, any wireless communications system that transmits data through scheduling is applicable to the embodiments of this application. To better understand this application, the LTE TDD system is used as an example to describe the embodiments of this application.

It should be understood that an uplink symbol is referred to as a single carrier frequency division multiple access (single carrier frequency division multiple access, "SC-FDMA" for short) symbol, and a downlink symbol is referred to as an orthogonal frequency division multiple access (Orthogonal Frequency Division Multiple Access, "OFDMA" for short) symbol. It should be noted that if an uplink multiple access mode of OFDMA is introduced in a subsequent technology, the uplink symbol may also be referred to as an OFDMA symbol. In the embodiments of this application, both the uplink symbol and the downlink symbol are collectively referred to as symbols, or may be symbols of communication of another type. This is not limited in the embodiments of this application.

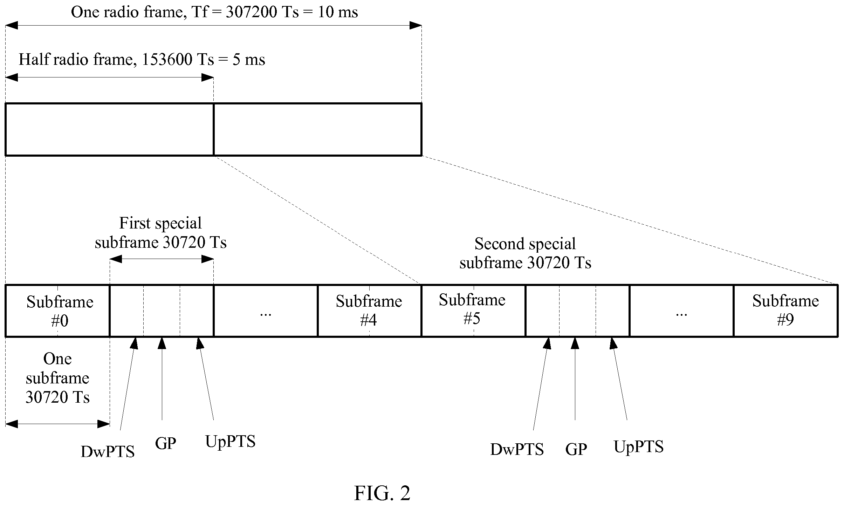

FIG. 2 shows a frame structure type in an LTE TDD system for communication between a terminal device and an access network according to an embodiment of this application. As shown in FIG. 2, in a frame structure of the LTE TDD system, one radio frame with a period of 10 ms includes two special subframes. Each of the two special subframes includes three parts: a downlink pilot slot DwPTS, a guard period GP, and an uplink pilot slot UpPTS. A symbol in the DwPTS part is used for downlink transmission, a symbol in the UpPTS is used for uplink transmission, and the GP is a guard period used for handover from downlink to uplink.

It should be understood that an SRS in this embodiment of this application may be transmitted on a symbol in an UpPTS in one special subframe.

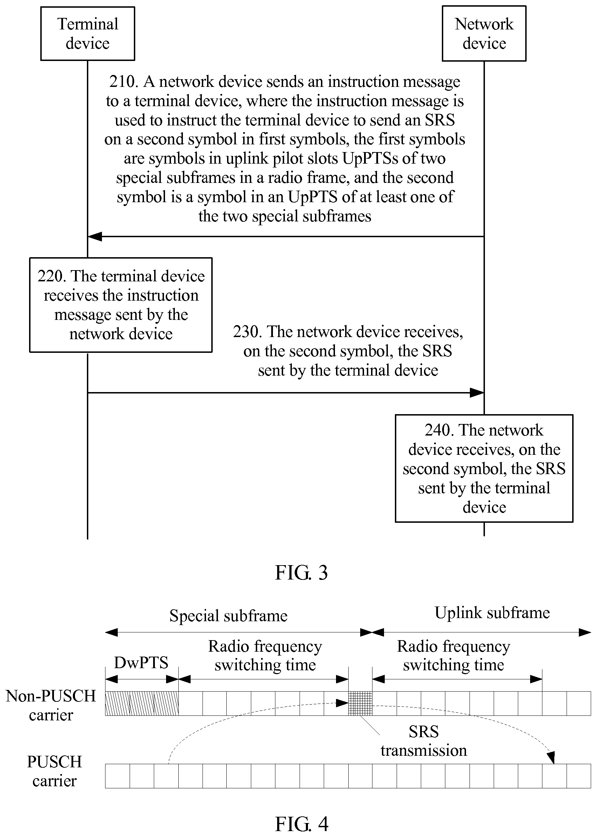

FIG. 3 is a schematic flowchart of a method 200 for transmitting a sounding reference signal SRS according to an embodiment of this application. As shown in FIG. 3, the method 200 includes the following content.

In 210, a network device sends an instruction message to a terminal device, where the instruction message is used to instruct the terminal device to send an SRS on a second symbol in first symbols, the first symbols are symbols in UpPTSs of two special subframes in a radio frame, and the second symbol is a symbol in an UpPTS of at least one of the two special subframes.

It should be understood that a first special subframe and a second special subframe exist in the radio frame, and the first symbols are symbols in both an uplink pilot slot UpPTS of the first special subframe and an uplink pilot slot UpPTS of the second special subframe.

It should be understood that the first special subframe and the second special subframe exist in the radio frame, and the second symbol has three cases:

Case 1: The second symbol is a symbol that belongs to the UpPTS of the first special subframe.
Case 2: The second symbol is a symbol that belongs to the UpPTS of the second special subframe.
Case 3: The second symbol is both a symbol in the UpPTS of the first special subframe and a symbol in the UpPTS of the second special subframe.

It should be understood that the second symbol is a part or all of the first symbols.

Optionally, the instruction message is used to instruct the terminal device to send the SRS on the second symbol.

Specifically, the instruction message is used to instruct the terminal device to send the SRS on a symbol in the UpPTS of the first special subframe; or

the instruction message is used to instruct the terminal device to send the SRS on a symbol in the UpPTS of the second special subframe; or
the instruction message is used to instruct the terminal device to send the SRS on both symbols in the UpPTSs of the first special subframe and the second special subframe.

Optionally, in this embodiment of this application, the network device may send the instruction message over a first carrier, where the first carrier may be further used by the terminal device to send uplink data to the network device.

Specifically, in a communications system, a carrier aggregation (CA, carrier aggregation) technology is supported, that is, a plurality of carriers are used to serve a user at the same time, to increase a system throughput and a user throughput. Load of a downlink service is usually heavier than that of an uplink service. Therefore, a quantity of component carriers (CC, component carriers) of downlink carrier aggregation is usually greater than a quantity of CCs of uplink carrier aggregation. For UE with a CA capability, a quantity of downlink aggregation carriers supported by the UE is usually greater than a quantity of uplink aggregation carriers. Therefore, there is no uplink transmission, including an SRS, on some carriers that support downlink transmission, and these carriers become non-PUSCH transmission carriers. On these carriers, the network device cannot obtain downlink channel information by using an SRS and channel reciprocity. Therefore, an uplink carrier may be quickly switched to allow the UE to send the SRS in uplink on a non-PUSCH transmission carrier, so as to obtain downlink channel information of a corresponding carrier.

In 220, the terminal device receives the instruction message sent by the network device.

In 230, the terminal device sends the SRS to the network device on the second symbol according to the instruction message.

In 240, the network device receives, on the second symbol, the SRS sent by the terminal device.

It should be understood that a quantity of second symbols for sending the SRS may be determined depending on an implementation situation, and is not specifically limited in this embodiment of this application. For example, there may be one second symbol, or there may be two, three, or more second symbols.

Therefore, in this embodiment of this application, the network device sends the instruction message to the terminal device, to instruct the terminal device to send the SRS on a symbol in an UpPTS of at least one of the two special subframes in the radio frame, so that symbol overheads during SRS transmission can be significantly reduced.

In addition, the terminal device is further instructed to send the SRS on the symbol in the UpPTS of the at least one of the two special subframes in the radio frame, so as to avoid frequent carrier switching, and reduce carrier switching overheads.

Specifically, based on the foregoing descriptions, an uplink carrier is quickly switched to allow the UE to send the SRS in uplink on a non-PUSCH transmission carrier, so as to obtain downlink channel information of a corresponding carrier. Because the UE needs to switch a radio frequency to another carrier, a specific switching time is required. A maximum switching time that is currently defined is 500 $\mu$s; in other words, approximately seven symbols are required. FIG. 4 is used as an example. If it is necessary to switch to a non-physical downlink shared channel (Physical Uplink Shared Channel, "PUSCH" for short) transmission carrier and send the SRS on a last symbol in a special subframe of the carrier, seven symbols preceding the symbol for sending the SRS need to be used as a radio frequency switching time. After the SRS is sent, a radio frequency switching time of seven symbols is further required for switching back to a PUSCH transmission carrier. If the SRS needs to be sent for a plurality of times, and only one symbol is sent at a time, total carrier switching overheads are very large. It can be learned that when carrier switching is performed to send the SRS, overheads of a required radio frequency switching time are quite large, because within the radio frequency switching time, the UE cannot perform sending or receiving, and uplink transmission and downlink transmission of these symbols are affected.

Therefore, in this embodiment of this application, the terminal device is instructed to send the SRS on the symbol in the UpPTS of the at least one of the two special subframes in the radio frame, so as to avoid frequent carrier switching for SRS transmission, and reduce carrier switching overheads.

In the invention as claimed, the network device sends at least two SRS configurations to the terminal device, the at least two SRS configurations include at least two SRS configuration indexes $I_{SRS}$, and the at least two $I_{SRS}$ are corresponding to the first symbols. In the invention as claimed, the at least two SRS configurations are more than two configurations.

Optionally, the terminal device may complete the at least two SRS configurations in advance as required.

Optionally, the at least two SRS configurations may be implemented according to a same configuration policy, or may be implemented according to different configuration policies. In addition, the configuration policy may be based on a release earlier than the LTE Release 13, that is, one or two symbols in an UpPTS are configured for UE to send an SRS; or may be based on the LTE Release 13, that is, one or two symbols in two or four symbols in an UpPTS are configured for UE to send an SRS. Alternatively, a new configuration policy may be defined: Four symbols in an UpPTS are configured for UE to send an SRS.

Optionally, the at least two SRS configurations are sent by the network device to the terminal device. The network device may send the at least two SRS configurations to the terminal device in advance as required, or may send the at least two SRS configurations together with the instruction message to the terminal device; or the at least two SRS configurations may be loaded into the instruction message and sent to the terminal device together with the instruction message.

Optionally, the at least two SRS configurations may be three SRS configurations, four SRS configurations, five SRS configurations, or even more SRS configurations. This is not specifically limited in this embodiment of this application.

Optionally, the at least two SRS configurations include at least two SRS configuration indexes $I_{SRS}$, and one SRS configuration includes one SRS configuration index $I_{SRS}$.

Optionally, the at least two $I_{SRS}$ are corresponding to the first symbols, and there is a correspondence between the $I_{SRS}$ and the first symbols.

Optionally, in this embodiment of this application, the symbols in the UpPTSs include two symbol sets, and there is no intersection between the two symbol sets.

The at least two SRS configurations are used to indicate symbols in at least one of the two symbol sets; and the $I_{SRS}$ is used to indicate an SRS subframe offset and an SRS period, and used to determine the symbols in the symbol set.

Optionally, there are two symbol sets in symbols in an UpPTS of each of the two special subframes, the two symbol sets have no intersection, and symbols in the two symbol sets are separately corresponding to different SRS configurations.

It should be understood that the two symbol sets are used to better present that the symbols in the two symbol sets are separately corresponding to different SRS configurations, and there is no necessary subordination relationship between a symbol and a symbol set.

Optionally, the at least two SRS configurations are used to indicate symbols in at least one of the two symbol sets.

For example, a first SRS configuration may be used to indicate a symbol in a first symbol set, a second SRS configuration may be used to indicate a symbol in a second symbol set, and another SRS configuration may also be used to indicate a symbol in the second symbol set.

Alternatively, a first SRS configuration may be used to indicate a symbol in a first symbol set, a second SRS configuration may be used to indicate a symbol in a second symbol set, and another SRS configuration may also be used to indicate a symbol in the first symbol set.

Alternatively, all SRS configurations are used to indicate symbols in a first symbol set.

Alternatively, all SRS configurations are used to indicate symbols in a second symbol set.

Optionally, the $I_{SRS}$ is used to indicate the SRS subframe offset and the SRS period.

Optionally, the SRS period may be a period of a special subframe.

Optionally, according to the following Table 1 to Table 5, the SRS subframe offset and the SRS period may be queried based on the $I_{SRS}$.

**Table 1**

| SRS configuration index $I_{SRS}$ | SRS period $T_{SRS}$ (ms) | SRS subframe offset $T_{offset}$ |
|---|---|---|
| 0 | 2 | 0, 1 |
| 1 | 2 | 0, 2 |
| 2 | 2 | 1, 2 |
| 3 | 2 | 0, 3 |
| 4 | 2 | 1, 3 |
| 5 | 2 | 0, 4 |
| 6 | 2 | 1, 4 |
| 7 | 2 | 2, 3 |
| 8 | 2 | 2, 4 |
| 9 | 2 | 3, 4 |
| 10 - 14 | 5 | $I_{SRS}$ - 10 |
| 15 - 24 | 10 | $I_{SRS}$ - 15 |
| 25 - 44 | 20 | $I_{SRS}$ - 25 |
| 45 - 84 | 40 | $I_{SRS}$ - 45 |
| 85 - 164 | 80 | $I_{SRS}$ - 85 |
| 165 - 324 | 160 | $I_{SRS}$ - 165 |
| 325 - 644 | 320 | $I_{SRS}$ - 325 |
| 645 - 1023 | Reserved | Reserved |

**Table 2**

| SRS configuration index $I_{SRS}$ | SRS period $T_{SRS,1}$ (ms) | SRS subframe offset $T_{offset,1}$ |
|---|---|---|
| 0 | Reserved | Reserved |
| 1 | 2 | 0, 2 |
| 2 | 2 | 1, 2 |
| 3 | 2 | 0, 3 |
| 4 | 2 | 1, 3 |
| 5 | 2 | 0, 4 |
| 6 | 2 | 1, 4 |
| 7 | 2 | 2, 3 |
| 8 | 2 | 2, 4 |
| 9 | 2 | 3, 4 |
| 10 - 14 | 5 | $I_{SRS}$ - 10 |
| 15 - 24 | 10 | $I_{SRS}$ - 15 |
| 25 - 31 | Reserved | Reserved |

**Table 3**

| SRS configuration index $I_{SRS}$ | SRS period $T_{SRS,1}$ (ms) | SRS subframe offset $T_{offset,1}$ |
|---|---|---|
| 0 | 2 | 0, 1 |
| 1 | 2 | 0, 2 |
| 2 | 2 | 1, 2 |
| 3 | 2 | 0, 3 |
| 4 | 2 | 1, 3 |
| 5 | 2 | 0, 4 |
| 6 | 2 | 1, 4 |
| 7 | 2 | 2, 3 |
| 8 | 2 | 2, 4 |
| 9 | 2 | 3, 4 |
| 10 - 14 | 5 | $I_{SRS}$ - 10 |
| 15 - 24 | 10 | $I_{SRS}$ - 15 |
| 25 - 31 | Reserved | Reserved |

**Table 4**

| SRS configuration index $I_{SRS}$ | SRS period $T_{SRS}$ (ms) | SRS subframe offset $T_{offset}$ |
|---|---|---|
| 0 | 2 | 0, 1 |
| 1 | 2 | 0, 2 |
| 2 | 2 | 1, 2 |
| 3 | 2 | 0, 3 |
| 4 | 2 | 1, 3 |
| 5 | 2 | 0, 4 |
| 6 | 2 | 1, 4 |
| 7 | 2 | 2, 3 |

(continued)

| SRS configuration index $I_{SRS}$ | SRS period $T_{SRS}$ (ms) | SRS subframe offset $T_{offset}$ |
|---|---|---|
| 8 | 2 | 2, 4 |
| 9 | 2 | 3, 4 |
| 10 - 14 | 5 | $I_{SRS}$ - 10 |
| 15 - 24 | 10 | $I_{SRS}$ - 15 |
| 25 - 44 | 20 | $I_{SRS}$ - 25 |
| 45 - 84 | 40 | $I_{SRS}$ - 45 |
| 85 - 164 | 80 | $I_{SRS}$ - 85 |
| 165 - 324 | 160 | $I_{SRS}$ - 165 |
| 325 - 644 | 320 | $I_{SRS}$ - 325 |
| 645 | 2 | 0, 1, 2, 3 |
| 646 | 2 | 5, 6, 7, 8 |
| 647 - 1023 | Reserved | Reserved |

**Table 5**

| SRS configuration index $I_{SRS}$ | SRS period $T_{SRS,1}$ (ms) | SRS subframe offset $T_{offset,1}$ |
|---|---|---|
| 0 | Reserved | Reserved |
| 1 | 2 | 0, 2 |
| 2 | 2 | 1, 2 |
| 3 | 2 | 0, 3 |
| 4 | 2 | 1, 3 |
| 5 | 2 | 0, 4 |
| 6 | 2 | 1, 4 |
| 7 | 2 | 2, 3 |
| 8 | 2 | 2, 4 |
| 9 | 2 | 3, 4 |
| 10 - 14 | 5 | $I_{SRS}$ - 10 |
| 15 - 24 | 10 | $I_{SRS}$ - 15 |
| 25 | 2 | 0, 1, 2, 3 |
| 26 | 2 | 5, 6, 7, 8 |
| 27 - 31 | Reserved | Reserved |

Table 1 shows a correspondence among an $I_{SRS}$, an SRS subframe offset, and an SRS period in a case of a trigger type 0. Table 2 shows a correspondence among an $I_{SRS}$, an SRS subframe offset, and an SRS period in a case of a trigger type 1.

Optionally, as shown in Table 3, in the case of the trigger type 1, (0, 1) is assigned to an SRS subframe offset $T_{offset}$ corresponding to $I_{SRS}$ = 0, and $T_{SRS}$ = 2 ms is assigned to an SRS period.

Optionally, as shown in Table 4, a new configuration policy is used. In the case of the trigger type 0, (0, 1, 2, 3) is assigned to an SRS subframe offset $T_{offset}$ corresponding to $I_{SRS}$ = 645, and $T_{SRS}$= 2 ms is assigned to an SRS period; or (5, 6, 7, 8) is assigned to an SRS subframe offset $T_{offset}$ corresponding to $I_{SRS}$ = 646, and $T_{SRS}$ = 2 ms is assigned to an SRS period.

Optionally, as shown in Table 5, a new configuration policy is used. In the case of the trigger type 1, (0, 1, 2, 3) is assigned to an SRS subframe offset $T_{offset}$ corresponding to $I_{SRS}$ = 25, and $T_{SRS}$ = 2 ms is assigned to an SRS period; or (5, 6, 7, 8) is assigned to an SRS subframe offset $T_{offset}$ corresponding to $I_{SRS}$ = 26, and $T_{SRS}$ = 2 ms is assigned to an SRS period.

Optionally, a symbol in the symbol set is determined based on an SRS subframe offset and an SRS period that are indicated by the $I_{SRS}$, a symbol location in the symbol set may be determined based on the SRS subframe offset, and a symbol for sending the SRS is determined based on the symbol location.

The symbol location in the symbol set may be determined based on the following formula 1:

$$T_{SRS} = 2 \text{ ms and } (K_{SRS} - T_{offset}) \bmod 5 = 0 \qquad \text{Formula 1}$$

$T_{SRS}$ indicates an SRS period, $T_{offset}$ indicates an SRS subframe offset, and $K_{SRS}$ indicates an SRS symbol location to which $T_{offset}$ is mapped.

The symbol location in the symbol set may be alternatively determined based on the following formula 2:

$$T_{SRS} = 2 \text{ ms and } (K_{SRS} - T_{offset}) \bmod 10 = 0 \quad \text{Formula 2}$$

$T_{SRS}$ indicates an SRS period, $T_{offset}$ indicates an SRS subframe offset, and $K_{SRS}$ indicates an SRS symbol location to which $T_{offset}$ is mapped.

Optionally, $K_{SRS}$ may be selected from the following Table 6 and Table 7:

**Table 6**

| | Subframe index $n$ | | | | | | | | | | | |
|---|---|---|---|---|---|---|---|---|---|---|---|---|
| | 0 | 1 | | 2 | 3 | 4 | 5 | 6 | | 7 | 8 | 9 |
| | | First symbol | Second symbol | | | | | First symbol | Second symbol | | | |
| $k_{SRS}$ **when there are two consecutiv e symbols in an UpPTS** | | 0 | 1 | 2 | 3 | 4 | | 5 | 6 | 7 | 8 | 9 |
| $k_{SRS}$ **when there is one symbol in an UpPTS** | | 1 | | 2 | 3 | 4 | | 6 | | 7 | 8 | 9 |

**Table 7**

| | Subframe index $n$ | | | | | | | | | | | | | | | |
|---|---|---|---|---|---|---|---|---|---|---|---|---|---|---|---|---|
| | 0 | 1 | | | | 2 | 3 | 4 | 5 | 6 | | | | 7 | 8 | 9 |
| | | First symbol | Second symbol | Third symbol | Fourth symbol | | | | | First symbol | Second symbol | Third symbol | Fourth symbol | | | |
| $k_{SRS}$ when there are four consecutive symbols in an UpPTS | | 0 | 1 | 2 | 3 | | | | | 5 | 6 | 7 | 8 | | | |
| $k_{SRS}$ when there are two consecutive symbols in an UpPTS | | 2 | 3 | | | | | | | 7 | 8 | | | | | |

In Table 6, the subframe index 1 is corresponding to $K_{SRS} = (0, 1)$ when there are two consecutive symbols in the UpPTS, and is corresponding to $K_{SRS} = 1$ when there is one symbol in the UpPTS. The subframe index 6 is corresponding to $K_{SRS} = (5, 6)$ when there are two consecutive symbols in the UpPTS, and is corresponding to $K_{SRS} = 6$ when there is one symbol in the UpPTS.

In Table 7, the subframe index 1 is corresponding to $K_{SRS} = (0, 1, 2, 3)$ when there are four consecutive symbols in the UpPTS, and is corresponding to $K_{SRS} = (2, 3)$ when there are two consecutive symbols in the UpPTS. The subframe index 6 is corresponding to $K_{SRS} = (5, 6, 7, 8)$ when there are two consecutive symbols in the UpPTS, and is corresponding to $K_{SRS} = (7, 8)$ when there is one symbol in the UpPTS.

Optionally, in this embodiment of this application, the at least two SRS configurations include a first SRS configuration, a second SRS configuration, and a third SRS configuration. The first SRS configuration includes a first $I_{SRS}$, the second SRS configuration includes a second $I_{SRS}$, and the third SRS configuration includes a third $I_{SRS}$.

The first $I_{SRS}$ is corresponding to a symbol in a first symbol set of the at least two symbol sets.

The second $I_{SRS}$ and the third $I_{SRS}$ are separately corresponding to symbols in a second symbol set of the at least two symbol sets, where a symbol corresponding to the second $I_{SRS}$ is different from a symbol corresponding to the third $I_{SRS}$.

Optionally, in an implementation of the first aspect, there is a symbol spacing between any two symbol sets in the at least two symbol sets.

Optionally, when SRS trigger types are different, the first $I_{SRS}$, the second $I_{SRS}$, and the third $I_{SRS}$ are queried in different tables, and values corresponding to the first $I_{SRS}$, the second $I_{SRS}$, and the third $I_{SRS}$ are different.

When an SRS trigger type is 0, the first $I_{SRS}$, the second $I_{SRS}$, and the third $I_{SRS}$ are queried in Table 1.

When an SRS trigger type is 1, the first $I_{SRS}$ is queried in Table 3, and the second $I_{SRS}$ and the third $I_{SRS}$ are queried in Table 2.

Optionally, when the SRS trigger type is 0, the first SRS configuration includes the first $I_{SRS}$. The first SRS configuration may be implemented according to a configuration policy in a release earlier than the LTE Release 13, that is, one or two symbols in an UpPTS are configured for UE. The first $I_{SRS}$ may be selected from Table 1. The $K_{SRS}$ may be selected from Table 6. The first $I_{SRS}$ is 0, a subframe offset $T_{offset}$ corresponding to the first $I_{SRS} = 0$ is (0, 1), and a symbol location $K_{SRS}$ to which the subframe offset $T_{offset}$ (0, 1) is mapped is (0, 1).

When the SRS trigger type is 0, the second SRS configuration includes the second $I_{SRS}$. The second SRS configuration may be implemented according to a configuration policy in the LTE Release 13, that is, one or two symbols in two or four symbols in an UpPTS are configured for UE. The second $I_{SRS}$ may be selected from Table 1, and the $K_{SRS}$ may be selected from Table 7.

When the SRS trigger type is 0, the third SRS configuration includes the third $I_{SRS}$. The third SRS configuration may be implemented according to a configuration policy in the LTE Release 13, that is, one or two symbols in two or four symbols in an UpPTS are configured for UE. The third $I_{SRS}$ may be selected from Table 1, and the $K_{SRS}$ may be selected from Table 7.

Specifically, when the second $I_{SRS}$ is 0, a subframe offset $T_{offset}$ corresponding to the second $I_{SRS} = 0$ is (0, 1), and a symbol location $K_{SRS}$ to which the subframe offset $T_{offset}$ (0, 1) is mapped is (0, 1); and when the third $I_{SRS}$ is 7, a subframe offset $T_{offset}$ corresponding to the third $I_{SRS} = 7$ is (2, 3), and a symbol location $K_{SRS}$ to which the subframe offset $T_{offset}$ (2, 3) is mapped is (2, 3); or

when the second $I_{SRS}$ is 1, a subframe offset $T_{offset}$ corresponding to the second $I_{SRS} = 1$ is (0, 2), and a symbol location $K_{SRS}$ to which the subframe offset $T_{offset}$ (0, 2) is mapped is (0, 2); and when the third $I_{SRS}$ is 4, a subframe offset $T_{offset}$ corresponding to the third $I_{SRS} = 4$ is (1, 3), and a symbol location $K_{SRS}$ to which the subframe offset $T_{offset}$ (1, 3) is mapped is (1, 3); or

when the second $I_{SRS}$ is 2, a subframe offset $T_{offset}$ corresponding to the second $I_{SRS} = 2$ is (1, 2), and a symbol location $K_{SRS}$ to which the subframe offset $T_{offset}$ (1, 2) is mapped is (1, 2); and when the third $I_{SRS}$ is 3, a subframe offset $T_{offset}$ corresponding to the third $I_{SRS} = 3$ is (0, 3), and a symbol location $K_{SRS}$ to which the subframe offset $T_{offset}$ (0, 3) is mapped is (0, 3).

It should be understood that the subframe offset $T_{offset}$ corresponding to the first $I_{SRS}$ may be mapped to two symbol locations in the first symbol set, the subframe offset $T_{offset}$ corresponding to the second $I_{SRS}$ may be mapped to two symbol locations in the second symbol set, and the subframe offset $T_{offset}$ corresponding to the third $I_{SRS}$ may be mapped to two symbol locations in the second symbol set. The two symbol locations in the second symbol set and to which the subframe offset $T_{offset}$ corresponding to the second $I_{SRS}$ is mapped are different from the two symbol locations in the second symbol set and to which the subframe offset $T_{offset}$ corresponding to the third $I_{SRS}$ is mapped.

It should be understood that the terminal device may determine, based on the symbol location $K_{SRS}$, a specific symbol for sending the SRS.

Optionally, when the SRS trigger type is 1, the first SRS configuration includes the first $I_{SRS}$. The first SRS configuration may be implemented according to a configuration policy in a release earlier than the LTE Release 13, that is, one or two symbols in an UpPTS are configured for UE. The first $I_{SRS}$ may be selected from Table 3. The $K_{SRS}$ may be selected from Table 6. The first $I_{SRS}$ is 0, a subframe offset $T_{offset}$ corresponding to the first $I_{SRS}$ = 0 is (0, 1), and a symbol location $K_{SRS}$ to which the subframe offset $T_{offset}$ (0, 1) is mapped is (0, 1).

When the SRS trigger type is 1, the second SRS configuration includes the second $I_{SRS}$. The second SRS configuration may be implemented according to a configuration policy in the LTE Release 13, that is, one or two symbols in two or four symbols in an UpPTS are configured for UE. The second $I_{SRS}$ may be selected from Table 2, and the $K_{SRS}$ may be selected from Table 7.

When the SRS trigger type is 1, the third SRS configuration includes the third $I_{SRS}$. The third SRS configuration may be implemented according to a configuration policy in the LTE Release 13, that is, one or two symbols in two or four symbols in an UpPTS are configured for UE. The third $I_{SRS}$ may be selected from Table 2, and the $K_{SRS}$ may be selected from Table 7.

Specifically, when the second $I_{SRS}$ is 1, a subframe offset $T_{offset}$ corresponding to the second $I_{SRS}$ = 1 is (0, 2), and a symbol location $K_{SRS}$ to which the subframe offset $T_{offset}$ (0, 2) is mapped is (0, 2); and when the third $I_{SRS}$ is 4, a subframe offset $T_{offset}$ corresponding to the third $I_{SRS}$ = 4 is (1, 3), and a symbol location $K_{SRS}$ to which the subframe offset $T_{offset}$ (1, 3) is mapped is (1, 3); or

when the second $I_{SRS}$ is 2, a subframe offset $T_{offset}$ corresponding to the second $I_{SRS}$ = 2 is (1, 2), and a symbol location $K_{SRS}$ to which the subframe offset $T_{offset}$ (1, 2) is mapped is (1, 2); and when the third $I_{SRS}$ is 3, a subframe offset $T_{offset}$ corresponding to the third $I_{SRS}$ = 3 is (0, 3), and a symbol location $K_{SRS}$ to which the subframe offset $T_{offset}$ (0, 3) is mapped is (0, 3).

It should be understood that the subframe offset $T_{offset}$ corresponding to the first $I_{SRS}$ may be mapped to two symbol locations in the first symbol set, the subframe offset $T_{offset}$ corresponding to the second $I_{SRS}$ may be mapped to two symbol locations in the second symbol set, and the subframe offset $T_{offset}$ corresponding to the third $I_{SRS}$ may be mapped to two symbol locations in the second symbol set. The two symbol locations in the second symbol set and to which the subframe offset $T_{offset}$ corresponding to the second $I_{SRS}$ is mapped are different from the two symbol locations in the second symbol set and to which the subframe offset $T_{offset}$ corresponding to the third $I_{SRS}$ is mapped.

It should be understood that the terminal device may determine, based on the symbol location $K_{SRS}$, a specific symbol for sending the SRS.

Optionally, in this embodiment of this application, the at least two SRS configurations include a fourth SRS configuration and a fifth SRS configuration. The fourth SRS configuration includes a fourth $I_{SRS}$, and the fifth SRS configuration includes a fifth $I_{SRS}$.

The fourth $I_{SRS}$ is corresponding to a symbol in a first symbol set of the at least two symbol sets.

The fifth $I_{SRS}$ is corresponding to a symbol in a second symbol set of the at least two symbol sets.

Optionally, when SRS trigger types are different, the fourth $I_{SRS}$ and the fifth $I_{SRS}$ are queried in different tables, and values corresponding to the fourth $I_{SRS}$ and the fifth $I_{SRS}$ are different.

When the SRS trigger type is 0, the fourth $I_{SRS}$ is queried in Table 1, and the fifth $I_{SRS}$ is queried in Table 4.

When the SRS trigger type is 1, the fourth $I_{SRS}$ is queried in Table 3, and the fifth $I_{SRS}$ is queried in Table 5.

Optionally, when the SRS trigger type is 0, the fourth SRS configuration includes the fourth $I_{SRS}$. The fourth SRS configuration may be implemented according to a configuration policy in a release earlier than the LTE Release 13, that is, one or two symbols in an UpPTS are configured for UE. The fourth $I_{SRS}$ may be selected from Table 1. The $K_{SRS}$ may be selected from Table 6. The fourth $I_{SRS}$ is 0, a subframe offset $T_{offset}$ corresponding to the fourth $I_{SRS}$ = 0 is (0, 1), and a symbol location $K_{SRS}$ to which the subframe offset $T_{offset}$ (0, 1) is mapped is (0, 1).

When the SRS trigger type is 0, the fifth SRS configuration includes the fifth $I_{SRS}$. The fifth SRS configuration may be implemented according to a new configuration policy, that is, four symbols in an UpPTS are configured for UE. The fifth $I_{SRS}$ may be selected from Table 4, and the $K_{SRS}$ may be selected from Table 7.

Specifically, the fifth $I_{SRS}$ is 645, a subframe offset $T_{offset}$ corresponding to the second $I_{SRS}$ = 645 is (0, 1, 2, 3), and a symbol location $K_{SRS}$ to which the subframe offset $T_{offset}$ (0, 1, 2, 3) is mapped is (0, 1, 2, 3); or

the fifth $I_{SRS}$ is 646, a subframe offset $T_{offset}$ corresponding to the second $I_{SRS}$ = 646 is (5, 6, 7, 8), and a symbol location $K_{SRS}$ to which the subframe offset $T_{offset}$ (5, 6, 7, 8) is mapped is (5, 6, 7, 8).

Optionally, the subframe offset $T_{offset}$ corresponding to the first $I_{SRS}$ may be mapped to two symbol locations in the first symbol set, and the subframe offset $T_{offset}$ corresponding to the fifth $I_{SRS}$ may be mapped to four symbol locations in the second symbol set.

It should be understood that the terminal device may determine, based on the symbol location $K_{SRS}$, a specific symbol for sending the SRS.

Optionally, when the SRS trigger type is 1, the fourth SRS configuration includes the fourth $I_{SRS}$. The fourth SRS configuration may be implemented according to a configuration policy in a release earlier than the LTE Release 13, that is, one or two symbols in an UpPTS are configured for UE. The fourth $I_{SRS}$ may be selected from Table 3. The $K_{SRS}$ may be selected from Table 6. The fourth $I_{SRS}$ is 0, a subframe offset $T_{offset}$ corresponding to the fourth $I_{SRS}$ = 0 is (0, 1), and a symbol location $K_{SRS}$ to which the subframe offset $T_{offset}$ (0, 1) is mapped is (0, 1).

When the SRS trigger type is 1, the fifth SRS configuration includes the fifth $I_{SRS}$. The fifth SRS configuration may be implemented according to a new configuration policy, that is, four symbols in an UpPTS are configured for UE. The fifth $I_{SRS}$ may be selected from Table 5, and the $K_{SRS}$ may be selected from Table 7.

Specifically, the fifth $I_{SRS}$ is 25, a subframe offset $T_{offset}$ corresponding to the second $I_{SRS}$ = 25 is (0, 1, 2, 3), and a symbol location $K_{SRS}$ to which the subframe offset $T_{offset}$ (0, 1, 2, 3) is mapped is (0, 1, 2, 3); or

the fifth $I_{SRS}$ is 26, a subframe offset $T_{offset}$ corresponding to the second $I_{SRS}$ = 26 is (5, 6, 7, 8), and a symbol location $K_{SRS}$ to which the subframe offset $T_{offset}$ (5, 6, 7, 8) is mapped is (5, 6, 7, 8).

Optionally, the subframe offset $T_{offset}$ corresponding to the first $I_{SRS}$ may be mapped to two symbol locations in the first symbol set, and the subframe offset $T_{offset}$ corresponding to the fifth $I_{SRS}$ may be mapped to four symbol locations in the second symbol set.

Optionally, the terminal device may determine, based on the symbol location $K_{SRS}$, a specific symbol for sending the SRS.

Optionally, in this embodiment of this application, an SRS trigger type corresponding to the at least two SRS configurations is a first trigger type or a second trigger type.

When the SRS trigger type corresponding to the at least two SRS configurations is the first trigger type, the at least two SRS configurations and the instruction message are used to instruct the terminal device to send the SRS on the second symbol; or

when the SRS type corresponding to the at least two SRS configurations is the second trigger type, the method further includes: sending an SRS request to the terminal device in a subframe n, so as to instruct the terminal device to send the SRS on a second symbol, indicated by the instruction message, in an UpPTS of the first special subframe that meets n+k, where k is an integer greater than or equal to 4.

Optionally, an SRS trigger type corresponding to the at least two SRS configurations is a first trigger type or a second trigger type, the first trigger type may be a trigger type 0, and the second trigger type may be a trigger type 1.

Optionally, when the SRS trigger type corresponding to the at least two SRS configurations is the first trigger type, the at least two SRS configurations and the instruction message are used together to instruct the terminal device to send the SRS on the second symbol.

Optionally, when the SRS trigger type is the first trigger type, the instruction message instructs the terminal device that needs to send the SRS to send the SRS in an UpPTS of a special subframe that periodically occurs.

Optionally, when the SRS type corresponding to the at least two SRS configurations is the second trigger type, the network device sends an SRS request to the terminal device in a subframe n. The request is used to instruct the terminal device to send the SRS on a second symbol, indicated by the instruction message, in an UpPTS of the first special subframe that meets n+k, where k is an integer greater than or equal to 4.

Optionally, the SRS request is sent to the terminal device in the subframe n, and there may be a plurality of special subframes indicated by the instruction message sent by the network device. However, the SRS is sent only on the second symbol in the UpPTS of the first special subframe that meets n+k, where k is an integer greater than or equal to 4.

In this case, symbols for sending the SRS may be some symbols in second symbols in the UpPTS of the first special subframe that meets n+k, or may be all symbols in second symbols in the UpPTS of the first special subframe that meets n+k.

Optionally, in this embodiment of this application, the method is applied to a time division duplex TDD system.

Therefore, in this embodiment of this application, the network device sends the instruction message to the terminal device, to instruct the terminal device to send the SRS on a symbol in an UpPTS of at least one of the two special subframes in the radio frame, so that signaling overheads during SRS transmission can be significantly reduced.

In addition, the terminal device is further instructed to send the SRS on the symbol in the UpPTS of the at least one of the two special subframes in the radio frame, so as to avoid frequent carrier switching, and reduce carrier switching overheads.

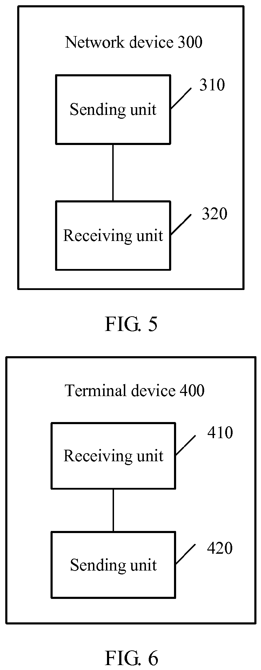

FIG. 5 is a schematic block diagram of a network device 300 according to an embodiment of this application. As shown in FIG. 5, the network device 300 includes a sending unit 310 and a receiving unit 320.

The sending unit 310 is configured to send an instruction message to a terminal device, where the instruction message is used to instruct the terminal device to send an SRS on a second symbol in first symbols, the first symbols are symbols in uplink pilot slots UpPTSs of two special subframes in a radio frame, and the second symbol is a symbol in an UpPTS of at least one of the two special subframes. The receiving unit 320 is configured to receive, on the second symbol, the SRS sent by the terminal device.

Optionally, the sending unit 310 is further configured to:

send at least two SRS configurations to the terminal device, where the at least two SRS configurations include at least two SRS configuration indexes $I_{SRS}$, and the at least two $I_{SRS}$ are corresponding to the first symbols.

Optionally, the symbols in the UpPTSs include two symbol sets, and there is no intersection between the two symbol sets.

The at least two SRS configurations are used to indicate symbols in at least one of the two symbol sets; and the $I_{SRS}$ is used to indicate an SRS subframe offset and an SRS period, and used to determine the symbols in the symbol set.

Optionally, the at least two SRS configurations include a first SRS configuration, a second SRS configuration, and a third SRS configuration. The first SRS configuration includes a first $I_{SRS}$, the second SRS configuration includes a second $I_{SRS}$, and the third SRS configuration includes a third $I_{SRS}$.

The first $I_{SRS}$ is corresponding to a symbol in a first symbol set of the at least two symbol sets.

The second $I_{SRS}$ and the third $I_{SRS}$ are separately corresponding to symbols in a second symbol set of the at least two symbol sets, where a symbol corresponding to the second $I_{SRS}$ is different from a symbol corresponding to the third $I_{SRS}$.

Optionally, the at least two SRS configurations include a fourth SRS configuration and a fifth SRS configuration. The fourth SRS configuration includes a fourth $I_{SRS}$, and the fifth SRS configuration includes a fifth $I_{SRS}$.

The fourth $I_{SRS}$ is corresponding to a symbol in a first symbol set of the at least two symbol sets.

The fifth $I_{SRS}$ is corresponding to a symbol in a second symbol set of the at least two symbol sets.

Optionally, the fifth $I_{SRS}$ is corresponding to four subframe offsets, and the four subframe offsets are corresponding to four symbols in the second symbol set.

Optionally, an SRS trigger type corresponding to the at least two SRS configurations is a first trigger type or a second trigger type.

When the SRS trigger type corresponding to the at least two SRS configurations is the first trigger type, the at least two SRS configurations and the instruction message are used to instruct the terminal device to send the SRS on the second symbol; or

when the SRS type corresponding to the at least two SRS configurations is the second trigger type, the sending unit 310 is further configured to send an SRS request to the terminal device in a subframe n, so as to instruct the terminal device to send the SRS on a second symbol, indicated by the instruction message, in an UpPTS of the first special subframe that meets n+k, where k is an integer greater than or equal to 4.

Optionally, the device 300 is applied to a TDD system.

It should be understood that the foregoing and other operations and/or functions of the units of the network device 300 in this embodiment of this application are separately used to implement corresponding procedures of the network device in the method 200 in FIG. 4. For brevity, details are not described herein again.

FIG. 6 is a schematic block diagram of a terminal device 400 according to an embodiment of this application. As shown in FIG. 6, the terminal device 400 includes a receiving unit 410 and a sending unit 420.

The receiving unit 410 is configured to receive an instruction message sent by a network device, where the instruction message is used to instruct the terminal device to send an SRS on a second symbol in first symbols, the first symbols are symbols in uplink pilot slots UpPTSs of two special subframes in a radio frame, and the second symbol is a symbol in an UpPTS of at least one of the two special subframes. The sending unit 420 is configured to send the SRS to the network device on the second symbol.

Optionally, the receiving unit 410 is further configured to receive at least two SRS configurations sent by the network device. The at least two SRS configurations include at least two SRS configuration indexes $I_{SRS}$, and the at least two $I_{SRS}$ are corresponding to the first symbols, and used to determine the first symbols based on the at least two SRS configurations.

Optionally, the symbols in the UpPTSs include two symbol sets, and there is no intersection between the two symbol sets.

The at least two SRS configurations are used to indicate symbols in at least one of the two symbol sets; and the $I_{SRS}$ is used to indicate an SRS subframe offset and an SRS period, and used to determine the symbols in the symbol set.

Optionally, the at least two SRS configurations include a first SRS configuration, a second SRS configuration, and a third SRS configuration. The first SRS configuration includes a first $I_{SRS}$, the second SRS configuration includes a second $I_{SRS}$, and the third SRS configuration includes a third $I_{SRS}$.

The first $I_{SRS}$ is corresponding to a symbol in a first symbol set of the at least two symbol sets.

The second $I_{SRS}$ and the third $I_{SRS}$ are separately corresponding to symbols in a second symbol set of the at least two symbol sets, where a symbol corresponding to the second $I_{SRS}$ is different from a symbol corresponding to the third $I_{SRS}$.

Optionally, the at least two SRS configurations include a fourth SRS configuration and a fifth SRS configuration. The fourth SRS configuration includes a fourth $I_{SRS}$, and the fifth SRS configuration includes a fifth $I_{SRS}$.

The fourth $I_{SRS}$ is corresponding to a symbol in a first symbol set of the at least two symbol sets.

The fifth $I_{SRS}$ is corresponding to a symbol in a second symbol set of the at least two symbol sets.

Optionally, the fifth $I_{SRS}$ is corresponding to four subframe offsets, and the four subframe offsets are corresponding to four symbols in the second symbol set.

Optionally, an SRS trigger type corresponding to the at least two SRS configurations is a first trigger type or a second trigger type.

When the SRS trigger type corresponding to the at least two SRS configurations is the first trigger type, the at least two SRS configurations and the instruction message are used to instruct to send the SRS to the network device on the second symbol; or

when the SRS type corresponding to the at least two SRS configurations is the second trigger type, the receiving unit 410 is further configured to receive, in a subframe n, an SRS request sent by the network device; and the sending unit 420 is configured to send the SRS on a second symbol, indicated by the instruction message, in an UpPTS of the first special subframe that meets n+k, where k is an integer greater than or equal to 4.

Optionally, the terminal device is applied to a time division duplex TDD system.

It should be understood that the foregoing and other operations and/or functions of the units of the terminal device 400 in this embodiment of this application are separately used to implement corresponding procedures of the terminal device in the method 200 in FIG. 4. For brevity, details are not described herein again.

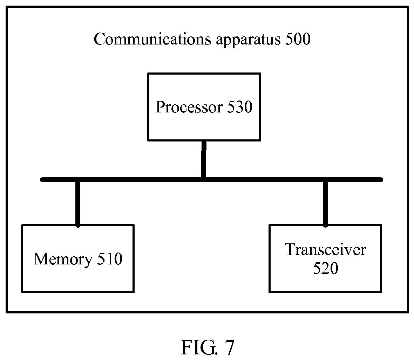

FIG. 7 is a schematic block diagram of a communications apparatus 500 according to an embodiment of this application. The communications apparatus 500 includes:

a memory 510, configured to store a program;
a transceiver 520, configured to communicate with another device; and
a processor 530, configured to execute the program stored in the memory 510.

Optionally, when the code is executed, the processor 530 may implement the operations performed by the terminal device in the method. For brevity, details are not described herein again. In this case, the communications apparatus 500 may be a terminal device.

Optionally, when the code is executed, the processor 530 may implement the operations performed by the network device in the method. For brevity, details are not described herein again. In this case, the communications apparatus 500 may be a network device.

It should be understood that in this embodiment of this application, the processor 530 may be a central processing unit (Central Processing Unit, "CPU" for short), or the processor 530 may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

The memory 510 may include a read-only memory and a random access memory, and provide an instruction and data for the processor 530. A part of the memory 510 may further include a non-volatile random access memory. For example, the memory 510 may further store information about a device type.

In an implementation process, steps in the foregoing methods can be implemented by using an integrated logic circuit of hardware in the processor 530, or by using instructions in a form of software. The steps of the methods disclosed with reference to the embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor 530 reads information in the memory and performs the steps in the foregoing methods in combination with hardware of the processor. To avoid repetition, details are not described herein again.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

A person of ordinary skill in the art may be aware that, with reference to the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the shown or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separated, and parts shown as units may or may not be physical units, may be located in one position, or may be distributed on a plurality of network units. Some or all of the units may be selected according to actual requirements to achieve the objectives of the solutions of the embodiments.

In addition, functional units in the embodiments of this application may be integrated into one processing unit, or each of the units may exist alone physically, or two or more units may be integrated into one unit.

When functions are implemented in a form of a software functional unit and sold or used as an independent product, the functions may be stored in a computer readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A method for transmitting a sounding reference signal, SRS, comprising:

    • receiving, by a terminal device, an instruction message sent by a network device, wherein the instruction message is used to instruct the terminal device to send an SRS on a second symbol in first symbols, the first symbols are symbols in uplink pilot slots UpPTSs of two special subframes in a radio frame, and the second symbol is a symbol in an UpPTS of at least one of the two special subframes (step 210);
    • receiving, by the terminal device, more than two SRS configurations sent by the network device, wherein the more than two SRS configurations comprise more than two SRS configuration indexes $I_{SRS}$, and the more than two $I_{SRS}$ are corresponding to the first symbols (step 220);
    • determining, by the terminal device, the first symbols based on the more than two SRS configurations;
    • sending, by the terminal device, the SRS to the network device on the second symbol (step 230).

2.  The method according to claim 1, wherein the symbols in the UpPTSs comprise two symbol sets, and there is no intersection between the two symbol sets; and the more than two SRS configurations are used to indicate symbols in at least one of the two symbol sets; and the $I_{SRS}$ is used to indicate an SRS subframe offset and an SRS period, and used to determine the symbols in the symbol set.

3.  The method according to claim 2, wherein the more than two SRS configurations comprise a first SRS configuration, a second SRS configuration, and a third SRS configuration, the first SRS configuration comprises a first $I_{SRS}$, the second SRS configuration comprises a second $I_{SRS}$, and the third SRS configuration comprises a third $I_{SRS}$;

    the first $I_{SRS}$ is corresponding to a symbol in a first symbol set of the at least two symbol sets; and
    the second $I_{SRS}$ and the third $I_{SRS}$ are separately corresponding to symbols in a second symbol set of the at least two symbol sets, wherein a symbol corresponding to the second $I_{SRS}$ is different from a symbol corresponding to the third $I_{SRS}$.

4.  The method according to claim 2, wherein the more than two SRS configurations comprise a fourth SRS configuration and a fifth SRS configuration, the fourth SRS configuration comprises a fourth $I_{SRS}$, and the fifth SRS configuration comprises a fifth $I_{SRS}$;

    the fourth $I_{SRS}$ is corresponding to a symbol in a first symbol set of the at least two symbol sets; and
    the fifth $I_{SRS}$ is corresponding to a symbol in a second symbol set of the at least two symbol sets.

5.  The method according to claim 4, wherein the fifth $I_{SRS}$ is corresponding to four subframe offsets, and the four subframe offsets are corresponding to four symbols in the second symbol set.

6. The method according to any one of claims 1 to 5, wherein an SRS trigger type corresponding to the at least two SRS configurations is a first trigger type or a second trigger type; and

when the SRS trigger type corresponding to the more than two SRS configurations is the first trigger type, the more than two SRS configurations and the instruction message are used to instruct to send the SRS to the network device on the second symbol; or

when the SRS trigger type corresponding to the more than two SRS configurations is the second trigger type, the method further comprises: receiving, in a subframe n, an SRS request sent by the network device, wherein the sending the SRS to the network device comprises: sending the SRS on a second symbol, indicated by the instruction message, in an UpPTS of the first special subframe that meets n+k, wherein k is an integer greater than or equal to 4.

7. A terminal device configured to perform any of the methods according to claims 1 to 6.

8. A computer-readable storage medium having a program recorded thereon; wherein the program when run by a computer, causes the computer to execute the method of any one of claims 1 to 6.

**Patentansprüche**

1. Verfahren zum Übertragen eines Klangreferenzsignals, SRS, das Folgendes umfasst:

• Empfangen, durch ein Endgerät, einer durch ein Netzwerkgerät gesendeten Anweisungsnachricht, wobei die Anweisungsnachricht zum Anweisen des Endgeräts, ein SRS auf einem zweiten Symbol in ersten Symbolen zu senden, verwendet wird und wobei die ersten Symbole Symbole in Uplink-Pilot-Schlitzen, UpPTSs, von zwei Spezialunterrahmen in einem Funkrahmen sind und das zweite Symbol ein Symbol in einem UpPTS von zumindest einem der zwei Spezialunterrahmen ist (Schritt 210);
• Empfangen, durch das Endgerät, von mehr als zwei durch das Netzwerkgerät gesendeten SRS-Konfigurationen, wobei die mehr als zwei SRS-Konfigurationen mehr als zwei SRS-Konfigurations-Indizes $I_{SRS}$ umfassen und die mehr als zwei $I_{SRS}$ den ersten Symbolen entsprechen (Schritt 220);
• Bestimmen, durch das Endgerät, der ersten Symbole basierend auf den mehr als zwei SRS-Konfigurationen,
• Senden, durch das Endgerät, des SRS an das Netzwerkgerät auf dem zweiten Symbol (Schritt 230).

2. Verfahren nach Anspruch 1, wobei die Symbole in den UpPTSs zwei Symbolsätze umfassen und es keinen Schnittpunkt zwischen den zwei Symbolsätzen gibt und die mehr als zwei SRS-Konfigurationen zum Angeben von Symbolen in zumindest einem der zwei Symbolsätze verwendet werden, und der $I_{SRS}$ zum Angeben eines SRS-Unterrahmen-Versatzes und eines SRS-Zeitraums verwendet wird und zum Bestimmen der Symbole im Symbolsatz verwendet wird.

3. Verfahren nach Anspruch 2, wobei die mehr als zwei SRS-Konfigurationen eine erste SRS-Konfiguration, eine zweite SRS-Konfiguration und eine dritte SRS-Konfiguration umfassen, die erste SRS-Konfiguration einen ersten $I_{SRS}$ umfasst, die zweite SRS-Konfiguration einen zweiten $I_{SRS}$ umfasst und die dritte SRS-Konfiguration einen dritten $I_{SRS}$ umfasst;

wobei der erste $I_{SRS}$ einem Symbol in einem ersten Symbolsatz der zumindest zwei Symbolsätze entspricht und wobei der zweite $I_{SRS}$ und der dritte $I_{SRS}$ getrennt Symbolen in einem zweiten Symbolsatz der zumindest zwei Symbolsätze entsprechen, wobei ein Symbol entsprechend dem zweiten $I_{SRS}$ von einem Symbol entsprechend dem dritten $I_{SRS}$ verschieden ist.

4. Verfahren nach Anspruch 2, wobei die mehr als zwei SRS-Konfigurationen eine vierte SRS-Konfiguration und eine fünfte SRS-Konfiguration umfassen, die vierte SRS-Konfiguration einen vierten $I_{SRS}$ umfasst und die fünfte SRS-Konfiguration einen fünften $I_{SRS}$ umfasst;

wobei der vierte $I_{SRS}$ einem Symbol in einem ersten Symbolsatz der zumindest zwei Symbolsätze entspricht und wobei der fünfte $I_{SRS}$ einem Symbol in einem zweiten Symbolsatz der zumindest zwei Symbolsätze entspricht.

**5.** Verfahren nach Anspruch 4, wobei der fünfte $I_{SRS}$ vier Unterrahmenversätzen entspricht und die vier Unterrahmenversätze vier Symbolen im zweiten Symbolsatz entsprechen.

**6.** Verfahren nach einem der Ansprüche 1 bis 5, wobei ein SRS-Auslösertyp entsprechend den zumindest zwei SRS-Konfigurationen ein erster Auslösertyp oder ein zweiter Auslösertyp ist; und

wenn der SRS-Auslösertyp entsprechend den mehr als zwei SRS-Konfigurationen der erste Auslösertyp ist, die mehr als zwei SRS-Konfigurationen und die Anweisungsnachricht zum Anweisen, das SRS an das Netzwerkgerät auf dem zweiten Symbol zu senden, verwendet werden, oder
wenn der SRS-Auslösertyp entsprechend den mehr als zwei SRS-Konfigurationen der zweite Auslösertyp ist, das Verfahren ferner Folgendes umfasst: Empfangen, in einem Unterrahmen n, einer durch das Netzwerkgerät gesendeten SRS-Anforderung, wobei das Senden des SRS an das Netzwerkgerät Folgendes umfasst: Senden des SRS auf einem zweiten Symbol, das durch die Anweisungsnachricht angegeben wird, in einem UpPTS des ersten Spezialunterrahmens, der n+k erfüllt, wobei k eine Ganzzahl größer oder gleich 4 ist.

**7.** Endgerät, das zum Durchführen eines der Verfahren nach einem der Ansprüche 1 bis 6 ausgelegt ist.

**8.** Computerlesbares Speichermedium, auf dem ein Programm erfasst ist; wobei das Programm, wenn es durch einen Computer ausgeführt wird, den Computer zum Ausführen des Verfahrens nach einem der Ansprüche 1 bis 6 veranlasst.

**Revendications**

**1.** Procédé de transmission d'un signal de référence de sondage, SRS, comprenant :

• la réception, par un dispositif terminal, d'un message d'instruction envoyé par un dispositif de réseau, le message d'instruction étant utilisé pour ordonner au dispositif terminal d'envoyer un SRS sur un deuxième symbole dans les premiers symboles, les premiers symboles étant des symboles dans des créneaux pilotes de liaison montante UpPTS de deux sous-trames spéciales dans une trame radio, et le deuxième symbole étant un symbole dans un UpPTS d'au moins une des deux sous-trames spéciales (étape 210) ;
• la réception, par le dispositif terminal, de plus de deux configurations SRS envoyées par le dispositif de réseau, les plus de deux configurations SRS comprenant plus de deux indices de configuration $I_{SRS}$, et les plus de deux $I_{SRS}$ correspondant aux premiers symboles (étape 220) ;
• la détermination, par le dispositif terminal, des premiers symboles sur la base des plus de deux configurations SRS ;
• l'envoi, par le dispositif terminal, du SRS au dispositif de réseau sur le deuxième symbole (étape 230).

**2.** Procédé selon la revendication 1, les symboles dans les UpPTS comprenant deux ensembles de symboles, et aucune intersection n'existant entre les deux ensembles de symboles ; et les plus de deux configurations SRS étant utilisées pour indiquer les symboles dans au moins l'un des deux ensembles de symboles ; et l'ISRS étant utilisé pour indiquer un décalage de sous-trame SRS et une période SRS, et utilisé pour déterminer les symboles dans l'ensemble de symboles.

**3.** Procédé selon la revendication 2, les plus de deux configurations SRS comprenant une première configuration SRS, une deuxième configuration SRS et une troisième configuration SRS, la première configuration SRS comprenant un premier $I_{SRS}$, la deuxième configuration SRS comprenant un deuxième $I_{SRS}$, et la troisième configuration SRS comprenant un troisième $I_{SRS}$ ;

le premier $I_{SRS}$ correspondant à un symbole d'un premier ensemble de symboles parmi les au moins deux ensembles de symboles ; et
le deuxième $I_{SRS}$ et le troisième $I_{SRS}$ correspondant séparément à des symboles d'un deuxième ensemble de symboles parmi les au moins deux ensembles de symboles, un symbole correspondant au deuxième $I_{SRS}$ étant différent d'un symbole correspondant au troisième $I_{SRS}$.

**4.** Procédé selon la revendication 2, les plus de deux configurations SRS comprenant une quatrième configuration SRS et une cinquième configuration SRS, la quatrième configuration SRS comprenant un quatrième $I_{SRS}$, et la cinquième configuration SRS comprenant un cinquième $I_{SRS}$ ;

le quatrième I$_{SRS}$ correspondant à un symbole d'un premier ensemble de symboles parmi les au moins deux ensembles de symboles ; et

le cinquième I$_{SRS}$ correspondant à un symbole d'un deuxième ensemble de symboles parmi les au moins deux ensembles de symboles.

5. Procédé selon la revendication 4, le cinquième I$_{SRS}$ correspondant à quatre décalages de sous-trame, et les quatre décalages de sous-trame correspondant à quatre symboles dans le deuxième ensemble de symboles.

6. Procédé selon l'une quelconque des revendications 1 à 5, un type de déclenchement SRS qui correspond aux au moins deux configurations SRS étant un premier type de déclenchement ou un deuxième type de déclenchement ; et

lorsque le type de déclenchement SRS correspondant aux plus de deux configurations SRS est le premier type de déclenchement, les plus de deux configurations SRS et le message d'instruction étant utilisés pour donner l'instruction d'envoyer le SRS au dispositif de réseau sur le deuxième symbole ; ou

lorsque le type de déclenchement SRS correspondant à plus de deux configurations SRS est le deuxième type de déclenchement, le procédé comprenant en outre : la réception, dans une sous-trame n, d'une demande SRS envoyée par le dispositif de réseau, l'envoi du SRS au dispositif de réseau comprenant : l'envoi du SRS sur un deuxième symbole, indiqué par le message d'instruction, dans un UpPTS de la première sous-trame spéciale qui correspond à n+k, k étant un nombre entier supérieur ou égal à 4.

7. Dispositif terminal configuré pour réaliser l'un quelconque des procédés selon les revendications 1 à 6.

8. Support de stockage lisible par ordinateur ayant un programme enregistré sur celui-ci ; le, programme, lorsqu'il est exécuté par un ordinateur, amenant l'ordinateur à réaliser le procédé selon l'une quelconque des revendications 1 à 6.

FIG. 1

One radio frame, Tf = 307200 Ts = 10 ms

Half radio frame, 153600 Ts = 5 ms

First special
subframe 30720 Ts

Second special
subframe 30720 Ts

| Subframe #0 | | ... | Subframe #4 | Subframe #5 | | ... | Subframe #9 |

One
subframe
30720 Ts

DwPTS    GP    UpPTS

DwPTS    GP    UpPTS

FIG. 2

EP 3 528 565 B1

Terminal device

Network device

210. A network device sends an instruction message to a terminal device, where the instruction message is used to instruct the terminal device to send an SRS on a second symbol in first symbols, the first symbols are symbols in uplink pilot slots UpPTSs of two special subframes in a radio frame, and the second symbol is a symbol in an UpPTS of at least one of the two special subframes

220. The terminal device receives the instruction message sent by the network device

230. The network device receives, on the second symbol, the SRS sent by the terminal device

240. The network device receives, on the second symbol, the SRS sent by the terminal device

FIG. 3

Special subframe | Uplink subframe

DwPTS | Radio frequency switching time | Radio frequency switching time

Non-PUSCH carrier

SRS transmission

PUSCH carrier

FIG. 4

Network device 300

Sending unit ⟋ 310

Receiving unit ⟋ 320

FIG. 5

Terminal device 400

Receiving unit ⟋ 410

Sending unit ⟋ 420

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *R1-156785, 3GPP TSG RAN WG1 Meeting#83, Anaheim, USA*, 15 November 2015